Europäisches Patentamt

European Patent Office

Office européen des brevets

(11) Publication number: **0 258 910 B1**

# EUROPEAN PATENT SPECIFICATION

(45) Date of publication of patent specification: **03.06.92**  (51) Int. Cl.⁵: **F16J 15/34**

(21) Application number: **87113735.2**

(22) Date of filing: **07.08.84**

(60) Publication number of the earlier application in accordance with Art.76 EPC: **0 138 317**

(54) **Improved mechanical seal.**

(30) Priority: **29.09.83 US 537229**

(43) Date of publication of application:
**09.03.88 Bulletin 88/10**

(45) Publication of the grant of the patent:
**03.06.92 Bulletin 92/23**

(84) Designated Contracting States:
**CH DE FR GB LI NL**

(56) References cited:
**US-A- 3 813 103      US-A- 4 039 196**
**US-A- 4 114 900      US-A- 4 174 844**
**US-A- 4 272 084      US-A- 4 296 935**

(73) Proprietor: **BW/IP INTERNATIONAL INC.**
**200 Oceangate, Suite 900**
**Long Beach California 90802-4371(US)**

(72) Inventor: **Wiese, Winfried John**
**14821 Hayward Street**
**Whittier California 90603(US)**

(74) Representative: **Allden, Thomas Stanley et al**
**A.A. THORNTON & CO. Northumberland**
**House 303-306 High Holborn**
**London WC1V 7LE(GB)**

## Description

This invention relates to high pressure mechanical seal assemblies constructed and used to prevent the uncontrolled leakage of a liquid along a rotating shaft, as for example, leakage along the shaft of a rotary liquid pump.

US-A-4272084 generally discloses a mechanical seal assembly for substantially preventing the flow of a fluid along a rotatable shaft from a high pressure region to a lower pressure region, the seal assembly being associated with a housing and comprising a pair of relatively rotatable seal rings surrounding the shaft and having opposed faces, one seal ring being connected to the shaft and the other seal ring being spaced from the shaft and connected to the housing, means urging the other seal ring towards the one seal ring, a back-up ring for the other seal ring, the other seal ring and the back-up ring having annular mating faces, the back-up ring surrounding and being spaced from the shaft, and a cylindrical balance sleeve surrounding and spaced from the shaft, the balance sleeve having a first diameter portion supporting the back-up ring and a second and larger diameter portion.

In accordance with the present invention as claimed, the aforesaid generally disclosed mechanical seal assembly is characterized in that the first and second diameter portions of the balance sleeve define an annular, radially disposed surface which is exposed to fluid in the high pressure region, and in that a cylindrical recess is defined in the housing which receives and forms a seat for the second and larger diameter portion of the cylindrical balance sleeve which is biased into the cylindrical recess by the fluid pressure acting on its annular, radially disposed surface.

Preferred embodiments of the present invention have been developed especially for use with nuclear reactor coolant pumps, boiler recirculating pumps, boiler feed pumps and pipeline pumps, and will meet the requirements for extreme and widely changing conditions of pressures and temperatures encountered in these uses, it being understood a mechanical seal assembly constructed in accordance with the present invention can also be used in less demanding installations. As an example of the widely changing pressures and temperature, the normal operating pressure in a pressurized water reactor is about 2200 psig (1.517 x $10^7$ Pa gauge pressure), and during start-up, the pressure can be as low as 20 to 30 psig ((1.38 to 2.07) x $10^5$ Pa gauge pressure). In such a reactor, the water in a coolant loop can reach a temperature of about 315°C (600°F), while the water entering the seal area may be as low as about 27°C (80°F). In these pumps, the pump shaft may move axially and may also wobble or deflect radially. An additional rigorous operating condition for the seals in such application is the combination of high pressure and high surface speeds which result from large diameter parts. It is thus necessary to construct a mechanical seal assembly capable of performing under these operational conditions.

In the preferred embodiments, the rotatable seal ring is made of a carbide material, and the stationary seal ring, or at least its seal face, is made of a softer material, such as carbon. Moreover, the back-up ring and the stationary seal ring are resiliently urged toward the rotating seal ring by a plurality of coil springs.

The preferred mechanical seal assembly is constructed in such a manner to substantially, if not totally, eliminate compressive loads on the outer periphery of the softer seal ring which causes distortions and deflections of this seal ring and leads to failure of the seal assembly. This is accomplished by encircling the softer seal ring and its back-up ring with a cylindrical member, and by providing one or more passages in the seal ring and back-up ring sub-assembly to ensure equalization of fluid pressures on their radially inner and outer surfaces. The fit of the cylindrical member around the seal ring and its back-up ring is such to permit fluid to exist therebetween and the radially outer surface of the cylindrical member is exposed to the high pressure fluid. Also, the seal ring and back-up ring subassembly is constructed so that axial fluid pressure on the back-up ring is sufficient to ensure sealing of the mating faces of the soft seal ring and the back-up ring, and to limit the transmissions of deflections of the back-up ring to the softer seal ring. Axial fluid pressures on the opposite sides of the stationary seal ring are substantially balanced, which ensures little, if any, deflections of the softer seal ring which could be caused by axial pressure differentials.

In order that the invention may we bell understood the preferred embodiments thereof, given by way of example, will now be described with reference to the accompanying drawing, in which:

Figure 1 is a partial cross-sectional view of the preferred embodiment of this invention, and

Figure 2 is a partial cross-section view of a second embodiment of this invention.

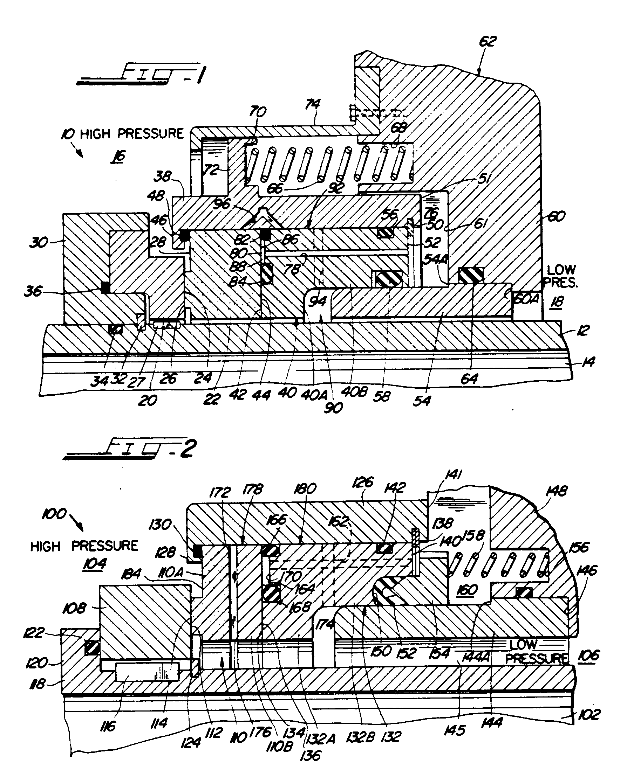

Referring first to Figure 1, a mechanical seal assembly 10 is shown which can be used as a single seal or in a more comprehensive assembly, a multiple stage mechanical seal. The seal assembly 10 comprises a shaft sleeve 12 adapted to be positioned over and connected (by means not shown) to a shaft 14, the seal substantially preventing the flow of fluid along the shaft 14 from a high pressure region or zone 16; for example, a pump (not shown) to a low pressure region or zone 18, for example, a motor (also not shown). A gasket (not shown) is provided between the sleeve 12 and the shaft 14 to prevent the flow of fluid therebetween.

The seal assembly 10 further comprises a rotating seal ring 20 of a carbide material and a stationary seal ring 22, the rings 20 and 22 being spaced from the shaft sleeve 12 and having lapped seal faces 24, 26 opposing one another, the face 26 being an annular surface with an ID greater than the ID of the ring 20 and an OD less than that of the ring 20. A surface 28 of the ring 22 is exposed to high pressure fluid in the region 16. The seal ring 20 is connected to the sleeve 12 by a key 27 or by other suitable well known means and has a rear portion received in a retainer 30 positioned on the shaft 14 by a split ring 32 received in complementary grooves in the sleeve 12 and the retainer 30. The retainer 30 is sealed to the sleeve 12 by an O-ring 34 and to the ring 20 by an O-ring 36.

The seal ring 22, the relatively softer seal ring in this embodiment and preferably constructed of carbon, is encircled by a generally cylindrical member 38 which also encircles a back-up ring 40. The fit between the member 38 and the rings 22 and 40 is such that fluid can be present therebetween. The back-up ring 40 is also spaced from the shaft sleeve 12 and has an annular face portion 42 abutting a rear face portion 44 of the ring 22. The member 38 has a radial depending flange 46 sealed to the surface 28 of the ring 22 by an O-ring 48. A snap ring 50, which fits in a groove in the member 38 and abuts a rear face 52 of the back-up ring 40, holds the rings 22 and 40 in their proper, abutting positions. The back-up ring 40 has a first cylindrical portion 40A and a second cylindrical portion 40B which is mounted on a cylindrical balance sleeve 54 for limited axial movement. The balance sleeve 54 encircles the shaft sleeve 12 and is spaced therefrom, such that low pressure fluid from the low pressure region 18 exists between the shaft sleeve 12 and the rings 20, 22 and 40. An O-ring 56 encircles the back-up ring 40 and seals an end thereof with the member 38, and an O-ring 58 encircles the balance sleeve 54 and seals the sleeve 54 with the rear portion 40B of the back-up ring 40 while permitting the limited axial movement of the back-up ring 40 relative to the balance sleeve 54. The balance sleeve 54 is sealed to a seal flange 60 of a housing 62 by an O-ring 64, and has its outer diameter stepped to provide an annular, radially disposed surface 54A. The balance sleeve 54 abuts a shoulder 60A of the housing flange 60, and fluid pressure on the surface 54A biases the balance sleeve against the shoulder 60A to ensure the seating of the sleeve 54 in the housing flange 60. The housing flange 60 is part of a more comprehensive housing 62, not all of which is shown.

Coil springs 66, only one of which is shown in Fig. 1, bias the subassembly of the seal ring 22, the back-up ring 40 and the member 38 towards the rotatable seal ring 20. The springs 66 are each received in respective spring pockets 68 in the housing 62 and spring pockets 70 in an outwardly extending radial flange 72 of the member 38. The springs 66 are essentially enclosed by a generally cylindrical cover 74 which encircles the flange 72 of the member 38 and is bolted to the housing flange 60.

The rear surface 52 of the back-up ring 40, the rear surface 51 of the member 38 and the annular surface 61 of the housing flange 60, cooperatively define an annular cavity 76 open to high pressure fluid. The back-up ring 40 is axially drilled at 78 to provide a fluid passageway between the cavity 76 and a cavity 80, the cavity 80 being defined by O-rings 82, 84, a portion 86 of the rear face 44 of the seal ring 22, and a reduced portion 88 of the front face 42 of the back-up ring 40. The effective pressure on the face 86 is substantially the same as on the face 28. Thus, the fluid pressures on opposite ends of the seal ring 22 are substantially the same.

The radially inner surfaces of the stationary seal ring 22 and its back-up ring 40 are spaced from the shaft sleeve 12 and define, with the shaft sleeve 12, a first zone 90 communicating with the low pressure zone 18, and the radially outer surfaces of the seal ring 22 and the back-up ring 40 define, with the member 38, a second zone 92. To ensure that the pressure on the radially outside surface of the seal ring 22 in the zone 92 is the same as on the radially inside surface of the seal ring 22 in the zone 90, the back-up ring 40 is radially drilled to provide a fluid passage 94 and the member 38 is angularly drilled to provide a fluid passage 96 bridging the O-ring 82. Because the pressure on the radially inner and outer surfaces of the seal ring 22 and the back-up ring 40 is the same or substantially the same, compressive loads due to pressure differentials do not exist and distortions and deflections of the softer seal ring 22 which are usually caused by such pressure differentials are completely or substantially eliminated.

Fig. 2 illustrates a second embodiment of this invention and shows a mechanical assembly 100 for substantially preventing the flow of fluid along a shaft 102 from a high pressure region or zone 104 to a low pressure region or zone 106. The seal assembly 100 comprises a rotatable seal ring 108 again of a carbide material and a stationary seal ring 110, having faces 112, 114, respectively, opposed to one another. The seal ring 108 is keyed by a key 116 to a shaft sleeve 118 and its end abuts a sleeve flange 120, being sealed thereto by an O-ring 122. The axial position of the ring 108 is fixed by a snap ring 124, as illustrated.

The stationary seal ring 110 is a composite, constructed of a carbon face portion 110A and a metal backing portion 110B, and is encircled by a generally cylindrical member 126 which has an inwardly directed flange 128 sealed to the ring 110 by an O-ring 130. A back-up ring 132 has a first cylindrical portion 132A and a rearwardly extending cylindrical portion 132B. The portion 132A has an annular face portion 134 abutting a rear face 136 of the ring 110. The back-up ring 132 is also encircled by the member 126. The fit between the seal ring 110, the back-up ring 132 and the member 126 is such that fluid can be present therebetween. A snap ring 138 abutting a rear face 140 of the ring 132 ensures the proper positioning of the rings 110 and 132 within the base of the member 126, and an O-ring 142 encircles the ring 132 at a location adjacent to the snap ring 138, thus sealing the juncture of the ring 132 and the member 126. The portion 132B of the ring 132 encircles a balance sleeve 144, which in turn encircles and is spaced from the shaft sleeve 118. The seal ring 110, the back-up ring 132 and the balance sleeve 144 are all spaced from the shaft sleeve 118, so that an annular space or zone 145 between the seal ring 110, the back-up ring 132 and the balance sleeve 144 is open to the low pressure zone 106. The balance sleeve 144 has its outer periphery stepped to provide an annular, radially disposed surface 144A. The sleeve 144 abuts a shoulder 146 of an housing flange 148. The pressure on the surface 144A biases the balance sleeve 144 against the shoulder 146 to ensure seating of the sleeve 144 in the housing flange 148. A cavity 150 in the ring 144 receives an elastomer U-cup 152 and a bull-nosed U-cup follower 154. Pockets 156 in the housing flange 148 each receive a spring 158 to bias the follower 154, the back-up ring 132, and the seal ring 110 toward the seal ring 108.

The rear surfaces 140 of the back-up ring 132 and 141 of the member 126 are exposed to high pressure fluid in a cavity 160, and the ring 132 is axially drilled, as at 162, to communicate high pressure fluid to an annular cavity 164 defined by O-rings 166, 168, a portion of the rear face 136 of the ring portion 110B and a reduced part 170 of the face 134 of the back-up ring 132. The springs 158 ensure seating of the faces 134 and 136 of the back-up ring 132 and the seal ring 110. The back-up ring 132 and a front face 172 of the metal ring portion 110B are radially drilled at 174 and the front face 172 of the metal ring portion 110B is radially grooved at 176 to provide communication between a zone 145 and a zone 180 and also between the zones 145 and 180. Thus the pressure on the radially outside surfaces of the rings 110 and 132 is essentially the same as the pressure on the radially inside surfaces of these rings. By so substantial eliminating pressure differentials on the radially inside surfaces and the radially outside surfaces of the seal ring 110 and the back-up ring 132, compressive loads on the ring portion 110A are substantially eliminated. Also, the pressure on a front face portion 184 of the ring portion 110A is essentially the same as that in the cavity 164, so that axial fluid pressures on the ring 110 are essentially balanced.

The O-ring seals where used are generally made of elastromeric materials, such as synthetic rubber and the like.

The present specification contains common subject-matter with that of European patent application No. 84305363.8 (published as EP-A-0 138 317) from which the present application has been divided.

## Claims

1. A mechanical seal assembly (10; 100) for substantially preventing the flow of a fluid along a rotatable shaft (14; 102) from a high pressure region (16; 104) to a lower pressure region (18; 106), the seal assembly (10; 100) being associated with a housing (62; 148) and comprising a pair of relatively rotatable seal rings (20, 22; 108, 110) surrounding the shaft (14; 102) and having opposed faces (24, 26; 112, 114), one seal ring (20; 108) being connected to the shaft (14; 102) and the other seal ring (22; 110) being spaced from the shaft (14; 102) and connected to the housing (62; 148), means (66; 158) urging the other seal ring (22; 110) towards the one seal ring (20; 108), a back-up ring (40; 132) for the other seal ring (22; 110), the other seal ring (22; 110) and the back-up ring (40; 132) having annular mating faces (42, 44; 134, 136), the back-up ring (40; 132) surrounding and being spaced from the shaft (14; 102), and a cylindrical balance sleeve (54; 144) surrounding and spaced from the shaft (14; 102), the balance sleeve (54; 144) having a first diameter portion supporting the back-up ring (40, 132); and a second and larger diameter portion, characterized in that the first and second diameter portions of the balance sleeve define an annular, radially disposed surface (54A; 144A) which is exposed to fluid in the high pressure region (16; 104), and in that a cylindrical recess is defined in the housing (62; 148) which receives and forms a seat (60A; 146) for the second and larger diameter portion of the cylindrical balance sleeve (54; 144) which is biased into the cylindrical recess by the fluid pressure acting on its annular, radially disposed surface (54A; 144A).

**2.** A mechanical seal assembly as claimed in claim 1, further comprising a shaft sleeve (12; 118) surrounding the shaft (14; 102) in closely spaced relationship and supporting the other seal ring (22; 110).

## Revendications

**1.** Assemblage d'étanchéité mécanique (10;100) pour empêcher pratiquement l'écoulement d'un fluide le long d'un arbre rotatif (14; 102) en provenance d'une région à haute pression (16; 104) vers une région à pression inférieure (18; 106), l'assemblage d'étanchéité (10; 100) étant associé à un boîtier (62; 148) et comprenant une paire de bagues d'étanchéité pouvant tourner l'une par rapport à l'autre (20, 22; 108, 110) entourant l'arbre (14; 102) et ayant des faces opposées (24, 26; 112, 114), une bague d'étanchéité (20; 108) étant reliée à l'arbre (14; 102) et l'autre bague d'étanchéité (22; 110) étant espacée de l'arbre (14; 102) et reliée au boîtier (62; 148), des moyens (66; 158) repoussant l'autre bague d'étanchéité (22; 110) vers la première bague d'étanchéité (20; 108), une contre-bague (40; 132) pour l'autre bague d'étanchéité (22; 110), l'autre bague d'étanchéité (22; 110) et la contre-bague (40; 132) ayant des surfaces adaptées annulaires (42, 44; 134, 136), la contre-bague (40; 132) entourant et étant espacée de l'arbre (14; 102), et un manchon d'équilibrage cylindrique (54; 144) entourant et étant espacé de l'arbre (14; 102), le manchon d'équilibrage (54; 144) ayant une partie d'un premier diamètre supportant la contre-bague (40, 132); et une partie ayant un second diamètre plus grand, caractérisé en ce que les parties de premier et de second diamètres du manchon d'équilibrage définissent une surface annulaire disposée radialement (54A; 144A) qui est exposée à du fluide dans la région à haute pression (16; 104) et en ce qu'un évidement cylindrique est défini dans le boîtier (62; 148), celui-ci recevant et formant un siège (60A; 146) pour la partie de second diamètre plus grand du manchon d'équilibrage cylindrique (54; 144) qui est repoussé à l'intérieur de l'évidement cylindrique par la pression de fluide agissant sur sa surface annulaire disposée radialement (54A; 144A).

**2.** Assemblage d'étanchéité mécanique selon la revendication 1, comprenant en outre un manchon d'arbre (12; 118) entourant l'arbre (14; 102) en en étant faiblement espacé et servant de support à l'autre bague d'étanchéité (22; 110).

## Patentansprüche

**1.** Gleitringdichtung (10; 100), die eine Strömung entlang einer drehbaren Welle (14; 102) von einem Hochdruckbereich (16; 104) zu einem Niederdruckbereich (18; 106) im wesentlichen unterbindet, wobei die Dichtung (10; 100) einem Gehäuse (62, 148) zugeordnet ist und zwei relativ zueinander drehbare Dichtringe (20, 22; 108, 110) aufweist, die die Welle (14; 102) umgeben und entgegengesetzt gerichtete Stirnflächen (24, 26; 112, 114) besitzen, wobei ein Dichtring (20; 108) mit der Welle (14; 102) verbunden ist und der andere Dichtring (22; 110) zu der Welle (14; 102) beabstandet und mit dem Gehäuse (62; 148) verbunden ist, Mittel (66; 158) den anderen Dichtring (22; 110) in Richtung auf den einen Dichtring (20; 108) drücken, ein Stützring (40; 132) für den anderen Dichtring (22; 110) vorgesehen ist, der andere Dichtring (22; 110) und der Stützring (40; 132) ringförmige, an einander angepaßte Stirnflächen (42, 44; 134, 136) besitzen, der Stützring (40; 132) die Welle (14; 102) umgibt und zu dieser beabstandet ist, und eine zylindrische Ausgleichshülse (54; 104) die Welle (14; 102) umgibt und zu dieser beabstandet ist, wobei die Ausgleichshülse (54; 144) einen den Stützring (40; 132) abstützenden Abschnitt eines ersten Durchmessers sowie einen Abschnitt eines zweiten und größeren Durchmessers besitzt, dadurch gekennzeichnet, daß die beiden Abschnitte der Ausgleichshülse eine ringförmige, radial verlaufende Fläche (54A; 144A) bilden, die dem Strömungsmittel im Hochdruckbereich (16; 104) ausgesetzt ist, und daß in dem Gehäuse (62; 148) eine zylindrische Ausnehmung vorgesehen ist, die einen Sitz (60A; 146) für den Zweitdurchmesserabschnitt der zylindrischen Ausgleichshülse (54; 144) aufnimmt und bildet, welcher in die zylindrische Ausnehmung durch den Strömungsmitteldruck, der auf seine ringförmige, radial verlaufende Fläche (54A; 144A) wirkt, gedrückt wird.

**2.** Gleitringdichtung nach Anspruch 1, die ferner eine Wellenhülse (12; 118) aufweist, welche die Welle (14; 102) in engem Abstand umgibt und den anderen Dichtring (22; 110) abstützt.

FIG-1

FIG-2